# EUROPÄISCHE PATENTSCHRIFT

(11) **EP 1 061 362 B1**
(45) Veröffentlichungstag und Bekanntmachung des Hinweises auf die Patenterteilung: **17.04.2013**
(21) Anmeldenummer: 00112097.1
(22) Anmeldetag: 05.06.2000
(51) Int. Cl.: G01N 27/404, G01N 27/49

(54) **Verfahren und Gassensor zur Bestimmung des Sauerstoff-Partialdrucks**
Method and gassensor for measuring the partial pressure of oxygen
Procédé et capteur de gaz pour déterminer la pression partielle d'oxygène

(30) Priorität: 07.06.1999 DE 19925921
(43) Veröffentlichungstag der Anmeldung: 20.12.2000
(73) Patentinhaber: AREVA NP GmbH, 91052 Erlangen (DE)
(72) Erfinder: Preidel, Walter, Dr., 91058 Erlangen (DE); Liebert, Adelbert, Dipl.-Ing. (FH), 91301 Forchheim (DE)
(74) Vertreter: Tergau & Walkenhorst

(56) Entgegenhaltungen:
- EP-A- 0 170 998
- EP-A- 0 470 473
- EP-A- 0 667 524
- WO-A-96/05509
- DE-C- 949 981
- US-A- 3 050 371
- US-A- 3 247 452
- US-A- 5 575 930

## Beschreibung

Die Erfindung bezieht sich auf ein Verfahren zur Bestimmung des Sauerstoff-Partialdrucks in einem Medium, insbesondere in einer Flüssigkeit, mit einer spezifischen elektrischen Leitfähigkeit von weniger als 1 mS/cm.

Die Erfindung betrifft außerdem einen Gassensor zur elektrochemischen Bestimmung des Sauerstoff-Partialdrucks, insbesondere in einer Flüssigkeit, mit
- einer Meßelektrode,
- einer Gegenelektrode und
- optional einer Bezugselektrode.

Als Standardmethode zur Messung des Sauerstoff-Partialdrucks in einem Medium wird die polarographische Meßmethode (Reduktion von Sauerstoff) eingesetzt. Der Mechanismus dieser Sauerstoffreduktion wird wesentlich bestimmt von dem verwendeten Elektrodenmaterial sowie von der Vorbehandlung und der Zusammensetzung des Mediums. Als Meßelektrode kann z.B. eine Platin-Kathode dienen. Der Strom durch die Platin-Kathode beim Anlegen eines definierten Potentials ist eine Funktion des Sauerstoff-Partialdrucks im Medium. Ablagerungen aus dem Medium an der Oberfläche der Platin-Kathode können jedoch zu einer Vergiftung dieser Elektrode führen. Es ist deshalb ein ständiges Nacheichen des Elektrodensystems erforderlich.

Dieses Problem der Elektrodenvergiftung kann in bekannter Weise dadurch gelöst werden, daß die Elektroden mit einem Meßelektrolyten versehen und mit einer hydrophoben Membran abgedeckt sind. Die Membran läßt einen Gasaustausch zwischen dem Medium und dem Meßelektrolyten zu, verhindert aber das Eindringen von Substanzen, die zu einer Vergiftung der Elektroden führen könnten.

Zur Messung der Sauerstoff-Konzentration nach dieser Methode wird üblicherweise ein sogenannter Clark-Sensor (siehe z.B. US-PS 2,913,386, 3,260,656, 5,575,930 und 4,076,596) verwendet. Der auf dem elektrochemischen Prinzip beruhende Clark-Sensor umfaßt eine Goldkathode und eine Silberanode und weist einen sensoreigenen Meß- oder Innenelektrolyten auf, der mittels einer dünnen hydrophoben Membran aus Polytetrafluorethylen (Teflon) "festgehalten" wird.

Ein anderer Gassensor zur Messung des Sauerstoff-Partialdrucks oder der Sauerstoff-Konzentration ist aus der EP 0 470 473 A1 bekannt. Dieser Gassensor weist ein Drei-Elektrodensystem auf, umfassend eine Sensorelektrode (Arbeitselektrode, Meßelektrode), eine Gegenelektrode sowie eine Bezugselektrode. Die Bezugselektrode ist eine Ag/AgCl-Bezugselektrode. Die Gegenelektrode ist beispielsweise aus Platin, die Sensorelektrode aus elektrokatalytisch inaktivem Kohlenstoff, insbesondere aus Glaskohlenstoff, gefertigt. Vor der Sensorelektrode ist in der Regel eine sauerstoffdurchlässige Membran angeordnet. Zwischen der Sensorelektrode und der Gegenelektrode besteht eine elektrolytische Verbindung. Im Falle einer hydrophilen Membran besteht dieselbe aus Celluloseacetat oder perfluorsulfoniertem Polytetrafluorethylen. Die Membran kann auch auch hydrophob sein und z.B. aus Polytetrafluorethylen bestehen, wobei dann zwischen der Membran und der Sensorelektrode eine gesonderte elektrolytisch leitende Schicht, z.B. eine Kalium- oder Calciumchloridlösung, angeordnet ist.

Ein weiteres nach einem ähnlichen elektrochemischen Prinzip arbeitendes Drei-Elektrodensystem ist für den Bereich der Medizin zur Bestimmung von Substanzen in Körperflüssigkeiten aus der EP 0 470 290 B1 bekannt.

Wegen der Verwendung einer Membran und der hierfür geeigneten Materialien und/ oder wegen der Verwendung einer gesonderten Elektrolytlösung sind die oben genannten Sensoren, insbesondere der Clark-Sensor, nur bei Raumtemperatur und bei geringfügig diesbezüglich erhöhten Temperaturen betreibbar.

Aus der EP 0 170 998 A2 oder der EP 0 465 708 B1 ist außerdem eine Anordnung zur elektrochemischen Bestimmung des Sauerstoff-Partialdrucks bekannt, die mit unbedeckten Elektroden arbeitet. Um Vergiftungserscheinungen der Meßelektrode zu verhindern, werden dieser Elektrode zeitlich abwechselnd nacheinander zwei verschiedene Potentiale zyklisch aufgeprägt. Die Meßphase ist klein gegenüber der Zyklusdauer. Ein Zyklus besteht somit aus einer verhältnismäßig kurzen Meßphase und einer vergleichsweise langen Regenerierphase. Als Meßsignal dient die an den Elektroden umgesetzte Ladung. Außer der Meßelektrode und einer Gegenelektrode kann auch eine Ag/AgCl-Bezugselektrode vorhanden sein. Die Oberfläche der Elektroden befindet sich sowohl während der Meßphase als auch während der Regenerierphase im Kontakt mit dem Medium, in dem der Sauerstoff-Partialdruck gemessen werden soll. Die Meßelektrode kann z.B. aus Gold, Platin oder Kohlenstoff bestehen.

Ein besonderes Verfahren zum Betrieb eines Drei-Elektrodensystems und zur äußerst exakten elektrochemischen Bestimmung der Sauerstoff-Konzentration ist in der DE 40 14 109 A1 (korrespondierend zu EP 0 527 126 B1, US 5,376,244 und WO 91/17433) offenbart. Dabei wird der Sensorelektrode ein Potentialprofil mit wenigstens drei Potentialstufen aufgeprägt, der bei den ersten beiden Potentialstufen fließende Strom ermittelt und über die Zeit integriert, und aus der Differenz der beiden Integrale die Sauerstoff-Konzentration ermittelt. Die weitere Potentialstufe stellt ein Ruhepotential oder Regenerierpotential dar.

In der DE 40 14 109 A1 ist außerdem ein Gassensor beschrieben mit einer Sensorelektrode aus elektrokatalytisch inaktivem Kohlenstoff, insbesondere aus Glaskohlenstoff, Pyrographit, gesputtertem Kohlenstoff, gesputtertem Graphit oder amorphem wasserstoffhaltigem Kohlenstoff. Bei diesem Gassensor ist ebenfalls kein gesonderter Elektrolyt zwischen Gegenelektrode und Sensorelektrode vorhanden. Vielmehr wird das Medium, in dem die Sauerstoff-Konzentration gemessen werden soll, als Elektrolyt oder als elektrolytische Verbindung zwischen den Elektroden verwendet.

Aus der EP 0 455 071 A1 ist ein Verfahren zur Herstellung einer Pyrographit-Elektrode bekannt.

Häufig muß die Sauerstoffkonzentration in einer Flüssigkeit, insbesondere in Reinwasser, mit einer sehr geringen Leitfähigkeit von z.B. 1 µS/cm, mit einer sehr hohen Temperatur von z.B. oberhalb 100°C und außerdem mit gegenüber Normaldruck erhöhtem Druck mit hoher Genauigkeit gemessen werden. Insbesondere müssen Wasserkreisläufe eines Kraftwerks kontinuierlich überwacht werden (online monitoring), um die Korrosion auf einem Minimum halten zu können. Beispielsweise muß dort die Sauerstoffkonzentration bei 288°C und bei einem Druck von etwa 88 bar gemessen werden.

Die in den oben genannten Druckschriften beschriebenen Elektrodensysteme, die eine Membran oder/ und einen internen Meßelektrolyten verwenden, kommen - wie bereits weiter oben dargelegt wurde - für eine Anwendung in diesem Temperaturbereich nicht in Betracht.

Die in den oben genannten Druckschriften beschriebenen Elektrodensysteme mit unbedeckten Elektroden, die unmittelbar mit dem als Elektrolyten wirkenden Medium in Verbindung stehen, wurden in den beschriebenen Ausgestaltungen bzw. Betriebsweisen für eine Anwendung im Rein- oder Reinstwasser bislang nicht in Betracht gezogen. Dies liegt darin begründet, daß eine ausreichend hohe Leitfähigkeit im Medium, z.B. in einer Flüssigkeit, in der die Sauerstoff-Konzentration gemessen werden soll, für die beschriebenen bekannten Verfahren und Vorrichtungen als unerläßlich angesehen wurde, um noch meßbare Ströme zu erzielen. Die Fachwelt war deshalb bislang davon ausgegangen, daß die Drei-Elektrodensysteme mit unbedeckten Elektroden, insbesondere mit einer Meßelektrode aus elektrokatalytisch inaktivem Kohlenstoff, für einen Einsatz im Rein- oder Reinstwasser und speziell im Kraftwerksbereich nicht in Frage kommen.

Man ging deshalb bislang davon aus, im Anlagen- oder Kraftwerksbereich, in dem Rein- oder Reinstwasser sehr hoher Temperatur auftritt, z.B. bei einer Temperatur oberhalb von 100 °C, auf die beschriebenen elektrochemisch arbeitenden Sauerstoffsensoren mit internen Elektrolyten und gegebenenfalls mit Membran zurückgreifen zu müssen, obwohl diese für den in Betracht gezogenen Temperaturbereich eigentlich nicht geeignet sind. Bei den anvisierten hohen Temperaturen ist auch der handelsübliche Clark-Sensor nicht mehr betreibbar. Zur Messung der Sauerstoff-Konzentration wird deshalb die betreffende Flüssigkeit, insbesondere Wasser, auf Raumtemperatur abgekühlt und auf Normaldruck entspannt. Anschließend wird die Sauerstoff-Konzentration des Wassers mit dem Clark-Sensor in einer Durchflußzelle gemessen. Diese Vorgehensweise hat den Nachteil, daß sich durch das Abkühlen und Entspannen möglicherweise Fehler hinsichtlich des Meßwerts für die Sauerstoff-Konzentration ergeben. Außerdem ist eine derartige Vorgehensweise für eine kontinuierliche Überwachung einer Kraftwerkskreislaufs nicht geeignet.

Der Erfindung liegt demzufolge die Aufgabe zugrunde, ein Gassensor zur Bestimmung des Sauerstoff-Partialdrucks in Reinwasser mit einer Temperator oberhalb 100 °C anzugeben.

Bei der Lösung der genannten Aufgabe geht die Erfindung von der grundlegenden Erkenntnis aus, daß ein nach dem elektrochemischen Prinzip arbeitender Gassensor mit elektrokatalytisch inaktiver Meßelektrode zur Messung des Sauerstoff-Partialdrucks in einem Reinwasser hoher Temperatur geeignet ist, ohne daß hierzu ein gesonderter Meßelektrolyt erforderlich wäre. Dies wurde von der Fachwelt bislang anders gesehen und deshalb nicht in Betracht gezogen.

Die verfahrensbezogene Aufgabe wird gemäß der Erfindung bezogen auf ein Verfahren der eingangs genannten Art dadurch gelöst, daß von einem nach dem elektrochemischen Prinzip arbeitenden Gassensor mit einer Meßelektrode, die zumindest an einer Kontaktfläche elektrokatalytisch inaktives, elektrisch leitfähiges Material aufweist, ein Ausgangssignal gemessen wird, während die Kontaktfläche mit dem Medium in Berührung steht.

Beim erfindungsgemäßen Verfahren steht also das elektrokatalytisch inaktive, elektrisch leitfähige Elektrodenmaterial unmittelbar, d.h. ohne Zwischenschaltung eines Elektrolyten oder einer Membran, mit dem Medium in Kontakt.

Der genannte Gassensor ist - wie Versuche gezeigt haben - derart ausgestaltbar, daß sein Einsatz auch in einem Medium mit sehr geringer Leitfähigkeit möglich ist. Vorzugsweise wird das Verfahren bei einer Leitfähigkeit des Mediums von weniger als 0,1 mS/cm oder von weniger als 10 µS/cm durchgeführt.

Die Erfindung geht von der weiteren Erkenntnis aus, daß der genannte Gassensor auch im Hochtemperaturbereich oberhalb von 100 °C einsetzbar ist. Versuche haben nämlich auch gezeigt, daß der bei dem Verfahren verwendete elektrochemische Gassensor auch in diesem Temperaturbereich zuverlässig arbeitet. Vorzugsweise wird deshalb das Ausgangssignal des Gassensors gemessen, während er mit dem Medium bei einer Temperatur oberhalb von 100 °C in Berührung steht.

Mit dem Verfahren wird der besondere Vorteil erzielt, daß der Sauerstoff-Partialdruck in einem heißen Medium geringer Leitfähigkeit direkt gemessen werden kann, und daß ein Abkühlen des Mediums auf Raumtemperatur nicht erforderlich ist. Dadurch ist es beispielsweise möglich, in einem Kraftwerk einen Wasserkreislauf hoher Temperatur online auf seine Sauerstoffkonzentration hin zu überwachen.

Beispielsweise weist der Gassensor ein Dreielektrodensystem auf. Insbesondere handelt es sich bei dem Gassensor um einen weiter unten beschriebenen Gassensor nach der Erfindung.

Nach einer bevorzugten Ausgestaltung ist das Material der Meßelektrode elektrokatalytisch inaktiver Kohlenstoff, insbesondere Glaskohlenstoff. Eine solches Elektrodenmaterial ist für einen Betrieb des Gassensors ohne internen Meßelektrolyten besonders geeignet. Die Ober- oder Kontaktfläche des Glaskohlenstoffs ist vorzugsweise glatt und weist nur eine sehr geringe Rauhigkeit auf.

Das Verfahren ist mit Vorteil dadurch weitergebildet, daß einer Meßelektrode des Gassensors ein Potentialprofil mit mehreren Potentialstufen aufgeprägt wird. Dadurch wird einer Elektrodenvergiftung wirksam vorgebeugt. Insbesondere ist eine der Potentialstufen ein Ruhe- oder Regenerierpotential. Das Verfahren ist zum Beispiel in einem nuklearen oder fossilen Kraftwerk anwendbar, in dem ein Rein- oder Reinstwasser bei einer sehr hohen Temperatur hinsichtlich der Sauerstoff-Konzentration überwacht werden muß. Das Medium ist also vorzugsweise ein Reinwasser einer technischen Anlage, insbesondere eines Kraftwerks, das mittels des Gassensors während des Anlagenbetriebs kontinuierlich überwacht wird.

Die vorrichtungsbezogene Aufgabe wird bezüglich eines Gassensors der eingangs genannten Art gelöst durch einen zwischen der Meßelektrode und der Gegenelektrode angeordneten Abstandshalter, mit dem ein Abstand zwischen der Meßelektrode und der Gegenelektrode konstant gehalten ist. Der Abstandshalter füllt z.B. einen Zwischenraum zwischen den genannten Elektroden.

Durch einen solchen Abstandshalter ist in vorteilhafter Weise erreicht, daß sich beispielsweise Vibrationen oder Strömungsschwankungen in dem Medium, in dem der Sauerstoff-Partialdruck gemessen werden soll, oder aber Temperaturschwankungen das Meßergebnis nicht oder zumindest nicht wesentlich beeinflussen können.

Insbesondere sind die Elektroden den Abstandhalter beidseitig berührend an- oder aufeinandergelegt. Zum Beispiel ist der Abstandhalter mit einer Seite an einer der Elektroden befestigt und die andere Elektrode ist an oder auf eine andere, z.B. gegenüberliegende, Seite des Abstandhalters gelegt.

Der Gassensor ist insbesondere zur Durchführung des Verfahrens nach der Erfindung geeignet.

Mit dem genannten Abstandshalter ist der Abstand außerdem auf einfache Weise bei einem sehr kleinen Wert konstant haltbar, ohne daß befürchtet werden müßte, daß beispielsweise infolge der genannten externen Einflüsse ein Kurzschluß zwischen der Meßelektrode und der Gegenelektrode stattfinden könnte. Der Abstandshalter ist deshalb vorzugsweise elektrisch isolierend. Bei einem sehr kleinen Abstand sind größere Ströme meßbar, und der Gassensor ist deshalb auch bei niedriger Leitfähigkeit des Mediums mit ausreichender Empfindlichkeit betreibbar.

Der Abstand, der von dem Abstandshalter konstant gehalten ist, größer als 5 µm und kleiner als 1 mm.

Der Abstandshalter kann in zahlreichen Ausgestaltungen realisiert sein. Beispielsweise umfaßt der Abstandshalter zahlreiche Schellen, die eine befestigende Verbindung zwischen der Meßelektrode und der Gegenelektrode herstellen.

Nach einer besonders bevorzugten Ausgestaltung ist der Abstandshalter in Form einer Beschichtung auf die Gegenelektrode und/oder auf die Meßelektrode aufgebracht. Ein derartiger Abstandshalter ist besonders einfach herstellbar. Auch lassen sich damit besonders kleine Abstände realisieren. Die Beschichtung oder Schicht ist z.B. auf der Gegenelektrode angebracht, und es liegt an der der Gegenelektrode abgewandten Seite der Beschichtung die Meßelektrode eng oder berührend an.

Nach einer anderen bevorzugten Ausgestaltung enthält der Abstandshalter ein Material mit einer offenen Porosität. Dadurch ist in vorteilhafter Weise gewährleistet, daß die Meßelektrode und/oder die Gegenelektrode auch an jenen Stellen von dem als Elektrolyten wirkenden Medium, in dem der Sauerstoff-Partialdruck gemessen werden soll, benetzbar sind, an denen sie mit dem Abstandshalter in Berührung stehen. Bei einer Ausführung des Abstandshalters als Beschichtung bedeutet dies, daß die Funktion der beschichteten Elektrode auch im Bereich der Beschichtung erhalten bleibt. Das Material ist insbesondere derart porös, daß es für Sauerstoff durchlässig ist oder zumindest Sauerstoff aufnehmen kann.

Nach einer anderen vorzugsweisen Ausgestaltung enthält der Abstandshalter ein Material mit einem geringen thermischen Ausdehnungskoeffizienten, insbesondere mit einem thermischen Ausdehnungskoeffizienten von weniger als 30·10⁻⁶/K. Außerdem bevorzugt ist der thermische Ausdehnungskoeffizient des Abstandshaltermaterials in etwa so groß wie der des Materials der Meßelektrode.

Vorzugsweise enthält der Abstandshalter ein keramisches oder glasartiges Material. Dadurch wird der Vorteil erreicht, daß der Gassensor auch bei Temperaturen oberhalb von 100 °C temperaturstabil arbeitet. Insbesondere ändert sich der Abstand, der von dem Abstandshalter zwischen der Meßelektrode und der Gegenelektrode konstant gehalten ist, nur sehr gering mit der Temperatur, so daß Temperaturschwankungen einen vernachlässigbaren Einfluß auf das Meßergebnis des Gassensors haben.

Nach einer ganz besonders bevorzugten Ausgestaltung ist das Material Zirkondioxid. Dieses Material vereint die Vorteile einer offenen Porosität mit einer Temperaturbeständigkeit oberhalb von 100 °C. Außerdem weist das Material einen sehr geringen thermischen Ausdehnungskoeffizienten auf.

Die Gegenelektrode des Gassensors umfaßt vorzugsweise einen Draht, ein Netz und/oder eine Platte. Sie ist insbesondere aus Platin gefertigt oder mit Platin beschichtet. Insbesondere handelt es sich dabei um Platin-Streckmetall oder um platiniertes Streckmetall auf einer glatten Glaskohlenstoff-Scheibe.

Vorzugsweise weist die Meßelektrode zumindest an einer Kontaktfläche elektrokatalytisch inaktives, elektrisch leitfähiges Material, insbesondere elektrokatalytisch inaktiven Kohlenstoff und speziell Glaskohlenstoff, auf.

Nachfolgend wird der Gassensor nach der Erfindung anhand von Ausführungsbeispielen in den Figuren 1 bis 4 näher erläutert. Die Figuren dienen auch der Erläuterung des Verfahrens nach der Erfindung. Es zeigt:
- FIG 1: ein erstes Ausführungsbeispiel eines Gassensors nach der Erfindung,
- FIG 2: ein zweites Ausführungsbeispiel eines Gassensors nach der Erfindung,
- FIG 3: ein Potentialprofil bei Durchführung des Verfahrens nach der Erfindung und
- FIG 4: eine typische elektronische Auswerteschaltung zur Auswertung der von einem Gassensor nach der Erfindung erzeugten Meßsignale.

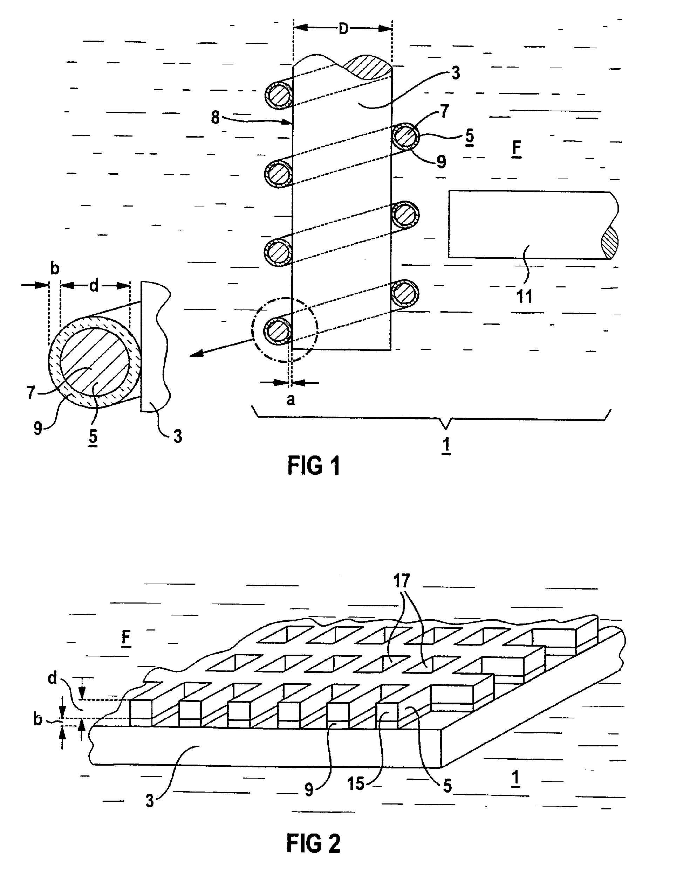

Figur 1 zeigt einen Gassensor 1 mit einem Dreielektrodensystem. Der Gassensor 1 umfaßt eine Meßelektrode 3 und eine Gegenelektrode 5.

Die Meßelektrode 3 ist durch einen Stab aus Glaskohlenstoff mit einer herstellungsbedingten glatten Oberfläche gebildet. Für die Funktionsfähigkeit des Gassensors 1 ist die glatte Oberfläche wichtig. Die Meßelektrode 3 kann anstelle von Glaskohlenstoff auch aus Pyrographit, aus gesputtertem Kohlenstoff, gesputtertem Graphit oder amorphem wasserstoffhaltigem Kohlenstoff bestehen. Die Meßelektrode 3 besteht zumindest an ihrer Oberfläche oder Kontaktfläche 8, an der sie mit dem zu vermessenden Medium F in Kontakt steht, teilweise aus einem der genannten Materialien.

Die Gegenelektrode 5 ist durch einen Platindraht 7 gebildet, der schraubenlinienförmig um die Meßelektrode 3 und an dieser eng anliegend geführt ist. Der Durchmesser D der Meßelektrode 3 beträgt ca. 3 mm. Der Durchmesser d des Drahts 7 aus Platin beträgt etwa 0,5 mm.

Der Platindraht 7 ist mit Zirkondioxid beschichtet (thermischer Ausdehungskoeffizient ≈ 11·10⁻⁶/K). Die Schichtdicke b dieser Beschichtung 9 beträgt etwa 100 µm. Dadurch, daß der Draht 7 der Gegenelektrode 5 mit seiner Beschichtung 9 eng an der Meßelektrode anliegt, ist durch die Schichtdicke b der Beschichtung 9 ein Abstand a zwischen der Meßelektrode 3 und der Gegenelektrode 5 konstant gehalten. Die Beschichtung 9 stellt einen Abstandshalter dar. Wichtig ist, daß sich der Abstand a während des Betriebs des Gassensors 1 nicht ändert. Dabei kann der Abstand a durchaus an unterschiedlichen Stellen unterschiedliche Werte aufweisen.

Die Gegenelektrode 5 kann anstelle von Platin auch aus anderen inerten, elektrochemisch aktiven Materialien bestehen, z.B. aus aktiviertem Glaskohlenstoff, aus korrosionsfestem Stahl und/oder aus Gold.

Die Meßelektrode 3 und die Gegenelektrode 5 tauchen zusammen mit einer in konstantem geringem Abstand von etwa 1 mm bis 50 mm (bevorzugt 5 mm bis 10 mm) zur Meßelektrode 3 und zur Gegenelektrode 5 angeordneten Bezugselektrode 11 in das Medium oder eine Flüssigkeit F mit einer Temperatur T von mehr als 100 °C und mit einer Leitfähigkeit von weniger als 100 µS/cm ein. Bei der Flüssigkeit F, deren Sauerstoff-Konzentration ermittelt werden soll, handelt es sich beispielsweise um ein Hochtemperatur-Reinstwasser in einem Kernkraftwerk, z.B. Primärkreiswasser, Speisewasser etc. Das Verfahren nach der Erfindung ist auch noch bei einer Leitfähigkeit von 0,05 µS/cm durchführbar, die in etwa bei völlig von Fremdionen befreitem Wasser auftritt (Leitfähigkeit der H⁺- und OH⁻-Ionen). Die Bezugselektrode 11 ist nur schematisch angedeutet. Sie weist eine Kapillare auf.

Figur 2 zeigt ein zweites Ausführungsbeispiel eines Gassensors 1 nach der Erfindung, bei dem die Meßelektrode 3 planar ausgebildet ist. Auf der plättchenförmigen Meßelektrode 3 ist die als Abstandshalter fungierende Beschichtung 9 in Form einer Netzstruktur aufgebracht. Über dem Netz der Beschichtung 9 ist ein Netz 15 der Gegenelektrode 5 das Netz der Beschichtung 9 überdeckend angeordnet. Durch Zwischenräume 17 im Netz 15 ist gewährleistet, daß die Flüssigkeit F in die poröse Beschichtung 9 gelangen und als Elektrolyt zwischen der Gegenelektrode 5 und der Meßelektrode 3 wirken kann. Die Bezugselektrode 11 ist bei dem in Figur 2 dargestellten zweiten Ausführungsbeispiel nicht gesondert dargestellt.

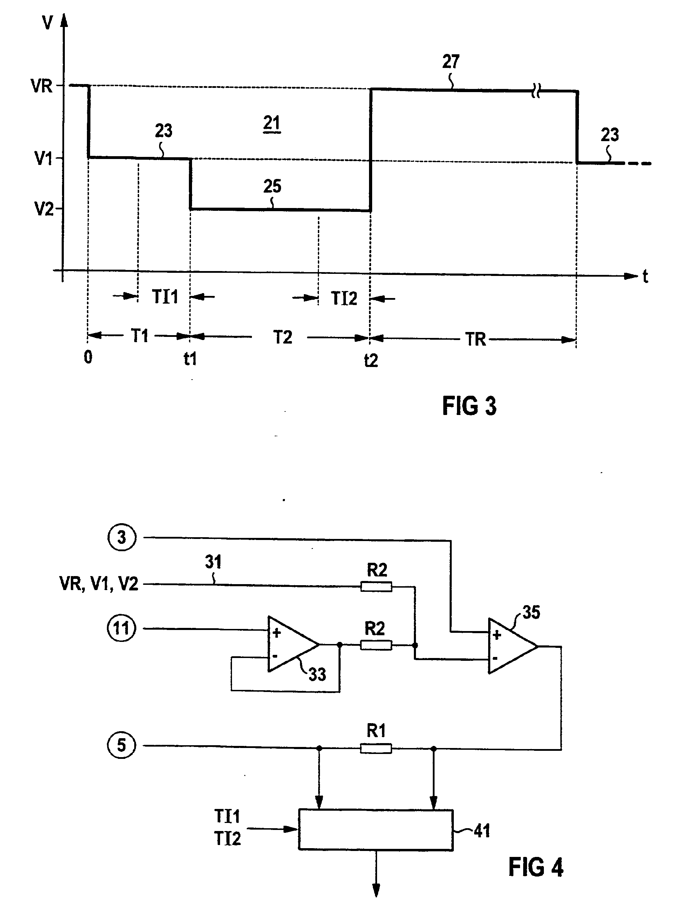

In Figur 3 ist ein Potentialprofil 21 dargestellt, das bei der Durchführung des Verfahrens nach der Erfindung vorzugsweise der Meßelektrode 3 des Gassensors 1 aufgeprägt wird. Figur 3 zeigt das der Meßelektrode 3 im Laufe einer Meßzeit t aufgeprägte veränderliche Potential V.

An der Meßelektrode 3 wird zunächst in einer ersten Potentialstufe 23 ein erstes Meßpotential V1 mittels eines definierten Stroms zwischen der Meßelektrode 3 und der Gegenelektrode 5 eingestellt. Dieses erste Meßpotential V1 wird ausgehend von einem willkürlich gewählten Zeitpunkt "0" bis zu einem ersten Zeitpunkt t1, also während einer ersten Verweildauer T1, festgehalten. Anschließend wird zu einer zweiten Potentialstufe 25 bei einem zweiten Meßpotential V2 gewechselt, das für eine zweite Verweildauer T2 bis zu einem zweiten Zeitpunkt t2 beibehalten wird. Anschließend wird eine weitere Potentialstufe 27 bei einem Ruhepotential VR für eine Ruhedauer TR eingestellt (Regenerierphase).

Unmittelbar vor Ablauf der ersten Verweildauer T1 wird in einer ersten Integrationszeit TI1 der Strom, der notwendig ist, um das erste Meßpotential V1 aufzuprägen, mit einem Integrator über die Zeit integriert. In analoger Weise wird vor Ablauf der zweiten Verweildauer T2 der zum Aufprägen des zweiten Meßpotentials V2 notwendige Strom während einer zweiten Integrationszeit TI2 über die Zeit integriert. Die Differenz der während der beiden Integrationszeiten TI1, TI2 gewonnenen Integralwerte bei den Meßpotentialen V1, V2 wird gebildet und dient als Meßsignal zur Bestimmung der Sauerstoff-Konzentration in der Flüssigkeit F in der unmittelbaren Umgebung des Gassensors 1 bzw. der Meßelektrode 3.

Zur Messung des Sauerstoff-Partialdrucks mittels einer Meßelektrode 3 aus Glaskohlenstoff haben die folgenden Meßparameter zu hervorragenden Ergebnissen geführt:

| | 1. Beispiel | 2. Beispiel |
|---|---|---|
| Erste Verweildauer T1 | 250 ms | 300 ms |
| Zweite Verweildauer T2 | 250 ms | 400 ms |
| Ruhedauer TR | 1500 ms | 4300 ms |
| Erste Integrationszeit TI1 | 100 ms | 150 ms |
| Zweite Integrationszeit TI2 | 100 ms | 100 ms |
| Erstes Meßpotential V1 | -800 mV | -700 mV |
| Zweites Meßpotential V2 | -1200 mV | -1350 mV |
| Ruhepotential VR | -200 mV | -200 mV |
| Dauer eines Meßzyklus | 2000 ms | 5000 ms |

Die Potentialangaben beziehen sich auf eine Ag/AgCl-Bezugselektrode.

In Figur 4 ist eine typische elektronische Schaltung dargestellt, mit Hilfe derer die Meßelektrode 3, die Gegenelektrode 5 und die Bezugselektrode 11 zu einer sogenannten Dreielektrodenanordnung zusammengeschaltet sind. Über einen an einer Steuerleitung 31 angeschlossenen Potentiostaten wird der Meßelektrode 3 das jeweils gewünschte Potential V bezogen auf das Potential der Bezugselektrode 11 mittels eines definierten Stroms zwischen der Meßelektrode 3 und der Gegenelektrode 5 aufgeprägt. Die Elektroden sind hierzu über Operationsverstärker 33, 35 in der dargestellten Art und Weise miteinander verbunden. Der Ausgang des Operationsverstärkers 35 steht mit der Gegenelektrode 5 über einen Widerstand R1 (=1 kΩ) in Verbindung, an dem ein Meßsignal für einen Integrator 41 abgegriffen wird, an dem die Integrationszeiten TI1, TI2 einstellbar sind. Dem Integrator 41 ist eine (nicht dargestellte) Auswerteeinheit nachgeordnet, in der die weiter oben beschriebene Differenzbildung der beiden bei den Meßpotentialen V1, V2 gewonnen Integrale stattfindet.

Die weiteren eingezeichneten Widerstände R2 betragen jeweils 100 kΩ. Die elektronische Schaltung ist erdfrei und abgeschirmt. Dadurch werden die Meßergebnisse bei besonders kleinen Leitfähigkeiten noch verbessert. Zum gleichen Zweck sind die Operationsverstärker rauscharme Präzisionstypen.

Der Gassensor 1 nach der Erfindung ist in einfacher herstellbar,
a) indem die Meßelektrode 3 und/ oder die Gegenelektrode 5 mit der Beschichtung 9 versehen wird/werden und
b) indem die beiden Elektroden 3, 5 die Beschichtung 9 als Abstandshalter nutzend an- oder aufeinander gelegt werden.

## Patentansprüche

1. Gassensor (1), zur elektrochemischen Bestimmung des Sauerstoff-Partialdrucks in Reinwasser mit einer Temperatur oberhalb 100 °C, mit
- einer Meßelektrode (3),
- einer Gegenelektrode (5),
- optional einer Bezugselektrode (11),
und mit einem zwischen der Meßelektrode (3) und der Gegenelektrode (5) angeordneten Abstandshalter, mit dem ein Abstand (a) zwischen der Meßelektrode (3) und der Gegenelektrode (5) konstant gehalten ist,
**dadurch gekennzeichnet, daß** der Abstand größer als 5 µm und kleiner als 1 mm ist, und daß die Meßelektrode (3) eine Kontaktfläche aufweist, die im Meßbetrieb mit dem Reinwasser in Berührung steht.

2. Gassensor (1) nach Anspruch 1,
**dadurch gekennzeichnet, daß** der Abstandshalter in Form einer Beschichtung (9) auf die Gegenelektrode (5) und/oder auf die Meßelektrode (3) aufgebracht ist.

3. Gassensor (1) nach Anspruch 1 oder 2,
**dadurch gekennzeichnet, daß** der Abstandhalter ein Material mit einer offenen Porosität enthält.

4. Gassensor (1) nach einem der Ansprüche 1 bis 3,
**dadurch gekennzeichnet, daß** der Abstandhalter ein keramisches oder glasartiges Material enthält.

5. Gassensor (1) nach Anspruch 4,
**dadurch gekennzeichnet, daß** das Material Zirkondioxid ist.

6. Gassensor (1) nach einem der Ansprüche 1 bis 5,
**dadurch gekennzeichnet, daß** die Gegenelektrode (5) einen Draht, ein Netz und/ oder eine Platte umfasst.

7. Gassensor (1) nach einem der Ansprüche 1 bis 6,
**dadurch gekennzeichnet, daß** die Gegenelektrode (5) aus Platin gefertigt oder mit Platin beschichtet ist.

8. Gassensor (1) nach einem der Ansprüche 1 bis 7,
**dadurch gekennzeichnet, daß** die Meßelektrode (3) zumindest an einer Kontaktfläche elektrokatalytisch inaktives, elektrisch leitfähiges Material, vorzugsweise elektrokatalytisch inaktiven Kohlenstoff und insbesondere Glaskohlenstoff, aufweist.

## Claims

1. A gas sensor (1) for electrochemically determining the oxygen partial pressure in pure water with a temperature of more than 100°C, having
- a measuring electrode (3),
- a counter-electrode (5),
- optionally, a reference electrode (11),
and having a spacer, arranged between the measuring electrode (3) and the counter-electrode (5), with which a space (a) between the measuring electrode (3) and the counter-electrode (5) is kept constant,
**characterized in that** the space is larger than 5 µm and smaller than 1 mm and that the measuring electrode (3) includes a contact surface which in the measuring mode is in contact with the pure water.

2. The gas sensor (1) of claim 1,
**characterized in that** the spacer is applied on the counter-electrode (5) and/or on the measuring electrode (3) in the form of a coating (9).

3. The gas sensor (1) of claim 1 or 2,
**characterized in that** the spacer contains a material with an open porosity.

4. The gas sensor (1) of any of claims 1 to 3,
**characterized in that** the spacer contains a ceramic or glassy material.

5. The gas sensor (1) of claim 4,
**characterized in that** the material zirconium dioxide.

6. The gas sensor (1) of any of claims 1 to 5,
**characterized in that** the counter-electrode (5) comprises a wire, a net and/or a plate.

7. The gas sensor (1) of any of claims 1 to 6,
**characterized in that** the counter-electrode (5) is made of platinum or is coated with platinum.

8. The gas sensor (1) of any of claims 1 to 7,
**characterized in that** the measuring electrode (3) includes, at least on one contact surface, an electrocatalytically inactive, electrically conductive material, preferably electrocatalytically inactive carbon and in particular glassy carbon.

## Revendications

1. Capteur de gaz (1) pour déterminer électrochimiquement la pression partielle d'oxygène dans l'eau pure à une temperature supérieure à 10°C, ayant
- une électrode de mesure (3),
- une contre-électrode (5),
- optionnellement, une électrode de référence (11),
et ayant un écarteur, disposé entre l'électrode de mesure (3) et la contre-électrode (5), avec lequel un écart (a) entre l'électrode de mesure (3) et la contre-électrode (5) est maintenue constant,
**caractérisé en ce que** l'écart est supérieur à 5 µm et inférieur à 1 mm et que l'électrode de mesure (3) comprend une surface de contact qui en mode de mesure est en contact avec l'eau pure.

2. Capteur de gaz (1) selon la revendication 1,
**caractérisé en ce que** l'écarteur est appliqué sur la contre-électrode (5) et/ou sur l'électrode de mesure (3) sous forme de revêtement (9).

3. Capteur de gaz (1) selon la revendication 1 ou 2,
**caractérisé en ce que** l'écarteur contient un matériau avec une porosité ouverte.

4. Capteur de gaz (1) selon l'une quelconque des revendications 1 à 3,
**caractérisé en ce que** l'écarteur contient un matériau céramique ou vitreux.

5. Capteur de gaz (1) selon la revendication 4,
**caractérisé en ce que** la matériau est dioxyde de zirconium.

6. Capteur de gaz (1) selon l'une quelconque des revendications 1 à 5,
**caractérisé en ce que** la contre-électrode (5) comprend un fil, un réseau et/ou une plaque.

7. Capteur de gaz (1) selon l'une quelconque des revendications 1 à 6,
**caractérisé en ce que** la contre-électrode (5) est faite de platine ou est revêtue de platine.

8. Capteur de gaz (1) selon l'une quelconque des revendications 1 à 7,
**caractérisé en ce que** l'électrode de mesure (3) comprend, au moins sur une surface de contact, un matériau électrocatalytiquement inactif et électriquement conducteur, de préférence carbone électrocatalytiquement inactif et en particulier carbone vitreux.
